# EUROPEAN PATENT SPECIFICATION

(11) **EP 2 722 773 B1**
(45) Date of publication and mention of the grant of the patent: **22.01.2020**
(21) Application number: 12188907.5
(22) Date of filing: 17.10.2012
(51) Int. Cl.: H04L 12/58, G06F 3/023, G06Q 10/10, G06F 17/27, G06F 3/0488

(54) **Method for updating display information based on detected language of a received message**
Verfahren zum Aktualisieren von Anzeigeinformationen basierend auf der erkannten Sprache einer empfangenen Nachricht
Procédé de mise à jour des informations d'affichage se basant sur la langue détectée d'un message reçu

(43) Date of publication of application: 23.04.2014
(73) Proprietor: BlackBerry Limited, Waterloo, ON N2K 0A7 (CA)
(72) Inventor: Pfeifer, Thomas, Waterloo, Ontario N2L 3W8 (CA)
(74) Representative: Vigand, Philippe

(56) References cited:
- US-A1- 2007 124 132
- US-A1- 2008 077 393
- US-A1- 2008 126 077

## Description

### BACKGROUND

The present disclosure relates generally to processing electronic messages for display in electronic devices.

Electronic devices are used in a variety of language settings, and users often find themselves writing and reading electronic messages in multiple languages. Accordingly, a set of languages is installed on electronic devices as part of, for example, an Operating System (OS), and additional languages may also be installed as required. With multiple languages installed on an electronic device, a user can review received messages and compose new messages in multiple languages. For example, a user may receive an e-mail message in English and then respond to it in the same language or in a different one.

US 2008/0126077 relates to a method for dynamically modifying an outgoing message language. US2007/124132 discloses a method for changing the text input settings of a device to reply to a received message received in a messaging application.

### SUMMARY

Under one aspect of this description, a method performed in a communication device is defined in independent claim 1.

Under another aspect of this description, an electronic device is defined in independent claim 7.

Under yet another aspect of this description, a computer-readable storage medium is defined in independent claim 13.

Other aspect of the invention are defined in the dependent claims.

### BRIEF DESCRIPTION OF THE DRAWINGS

This specification will now describe embodiments of the present disclosure, by way of example only, by referring to the attached figures, described below.
FIG. 1 is a block diagram of a communication device according to an embodiment.
FIG. 2 is a flowchart of a method for updating display information based on a detected language of a received message according to an embodiment.
FIGS. 3A and 3B illustrate displays that include updated displayed information based on the local-language parameters according to an embodiment.

### DETAILED DESCRIPTION

For simplicity and clarity of illustration, where considered appropriate, this specification repeats reference numerals among the figures to indicate corresponding or analogous elements. In addition, this specification provides numerous specific details in order to provide a thorough understanding of the embodiments here described. In some instances, aspects of this disclosure may be practiced without some specific details. In other instances, well-known methods, procedures, and components have not been described in detail so as not to obscure the embodiments here described. Also, the embodiments here described do not limit the claims or the scope of the embodiments.

When a device set in a first language receives a message in a second but different language, it makes sense for a user to reply to the sender in the language of the received message, as the sender may communicate only in that language. Using some devices, however, the user either must manually change a language setting on the device before composing a reply message in the second language or engage in an operational action, such as pressing a "reply" button, to change the language of a user interface or keyboard. This process takes a number of steps, which makes it slow and cumbersome for the user to communicate in the language of the received message.

The embodiments here described generally relate to a communication device that displays a received message and updates additional display information based on local-language parameters associated with the received message. Specifically, a communication device receives a message and the device detects a language associated with the received message. For example, the language of the received message is detected from the text of the message. Based on the detected language, local-language parameters stored in the device are updated, that is, the parameters are updated to correspond to the detected language. When, for example, the detected language is Spanish, local-language parameters corresponding to the Spanish language are stored or updated to reflect the detected language. The local-language parameters reflect all text-related data that is displayed along with a received message, including identifying information such as the subject, sender, etc., and functional menu options such as delete, forward, or reply, etc. Local-language parameters may therefore include all text-based data displayed on a user interface as well as the data that controls the functioning of an associated keyboard used for text entry. Thereafter, when the received message is displayed, the rest of the displayed information is updated based on the local-language parameter. Therefore, when a received message in Spanish is displayed, menu options such as reply, forward, etc., and fields such as "from," "to," and "subject" are displayed in Spanish, providing a linguistically efficient display of information related to the received message. Other aspects of the user interface shown in the display may also be modified as a function of the local-language parameter. For example, when the parameters reflect a language with a particular character set, a virtual keyboard may be updated to reflect the character set of that language.

Examples of communication devices according to this disclosure include personal computers (PCs), laptops, workstations, mobile or handheld wireless communication devices such as pagers, cellular phones, cellular smartphones, wireless organizers, personal digital assistants, wirelessly enabled notebook computers, and the like. The communication device is a two-way communication device with advanced data-communication capabilities, including the capability to communicate with other communication devices or computer systems through a network. Depending on the functionality provided by the communication device, it might be referred to as a data-messaging device, a tablet, a cellular telephone, a wireless Internet appliance, or a data-communication device (with or without telephony capabilities).

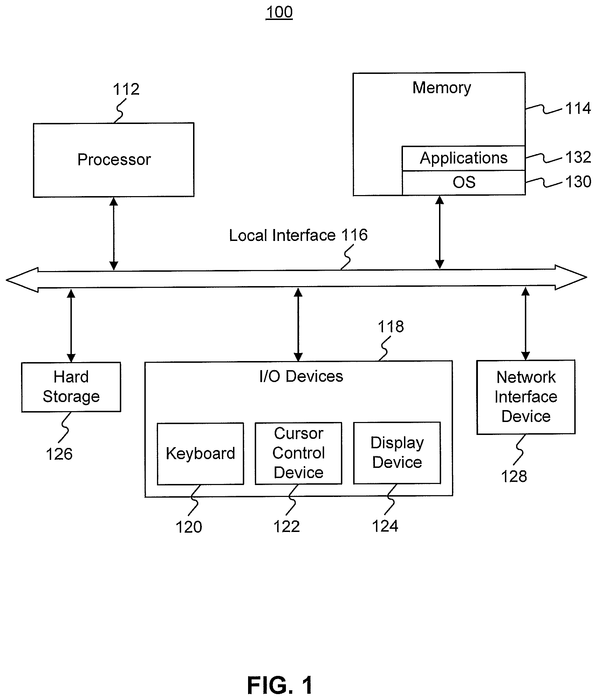

FIG. 1 is a block diagram of a communication device 100 according to one embodiment. The device 100 includes a processor 112 and a memory 114 coupled to a local interface 116. One or more input/output (I/O) devices 118, such as a keyboard 120, cursor-control device 122, and display device 124, are connected to local interface 116. Additionally, storage 126 and a network-interface device 128 are also shown.

Illustrated within memory 114 in FIG. 1 are operating system (OS) 130 and applications 132, both executable by processor 112. OS 130 is a software (or firmware) component of communication device 100 that provides an environment for the execution of programs by providing specific services to the programs, including loading the programs into memory 114 and running the programs. OS 130 also manages the sharing of internal memory resources among multiple applications and/or processes, and handles input and output control, file and data management, communication control, and related services. Application programs make requests for services to OS 130 through an application-program interface (not shown).

With reference again to FIG. 1, processor 112 is a hardware device for executing software located in memory 114, and is any custom-made or commercially available processor, a central-processing unit (CPU), a semiconductor-based microprocessor, a macro processor, or generally any device for executing software instructions. Memory 114 includes any one or a combination of volatile-memory elements (e.g., random-access memory (RAM, such as DRAM, SRAM, SDRAM, etc.)) and nonvolatile-memory elements (e.g., ROM, hard drive, tape, CDROM, DVDROM, etc.). In some embodiments, memory 114 incorporates electronic, magnetic, optical, and/or other types of storage media. Memory 114 may also have a distributed architecture, with various components situated remotely from one another, but accessible by processor 112.

Local interface 116 includes, for example, one or more buses or other wired or wireless connections, and may comprise additional elements, which are omitted for simplicity, such as controllers, buffers (caches), drivers, repeaters, and receivers. Further, local interface 116 includes address, control, and/or data connections to enable appropriate communications among components of communication device 100.

Input/output (I/O) devices 118 include any device configured to communicate with local interface 116. A keyboard 120, cursor-control device 122, and display device 124 are shown in FIG. 1. Additional input/output devices such as optical drives, cameras, I/O ports, printers, speakers, microphones, scanners, etc., could also be provided. In one embodiment, keyboard 120 is a virtual keyboard on a touch-screen display.

Cursor-control device 122 comprises any input device configured to cooperate with an application 132 and/or OS 130, and manipulate one or more cursor(s) displayed on display device 124. For example, cursor-control device 122 may include: a mouse, a trackball, a set of navigation keys (e.g., arrow keys), a touchpad, a joystick, or a touch-sensitive screen.

Communication device 100 is connected to a network, such as a cellular network or Internet, for example, via network-interface device 128. Network-interface device 128 may be any device configured to interface between communication device 100 and a computer or a network, such as a local or wide-area network, a private computer network, a public or private packet-switched or other data network, including the Internet, a circuit-switched network, or a wireless network.

In use, a received signal, such as a text message, an e-mail message, or web-page download, is processed by network interface device 128 and input to processor 112. Processor 112 then processes the received signal for output to display device 124. A user can also reply to such messages utilizing I/O devices 118 in combination with applications 132 stored in memory 114.

Apart from receiving and displaying received messages, it is desirable to update local-language parameters. These local-language parameters are utilized to update additional displayed information, apart from the received messages, and provide a convenient, intuitive, and user-friendly way to communicate in the language of the communication exchange.

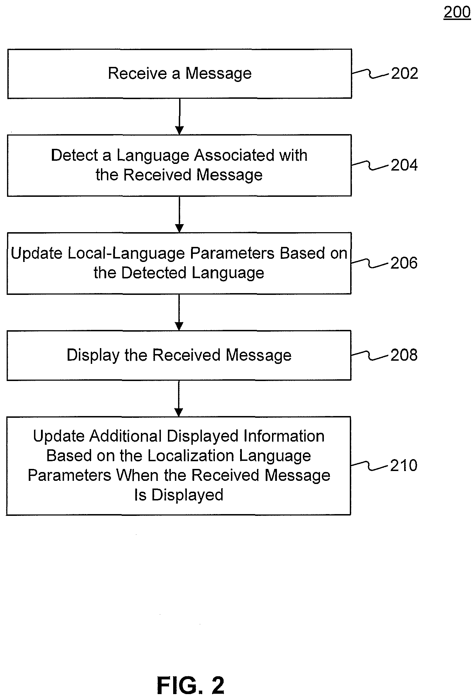

FIG. 2 is a flow diagram of an example method 200 of operation according to an embodiment for updating display information based on the detected language of a received message. The method includes receiving a message by an interface of the communication device at step 202. The message may be a Short Message Service (SMS) message, a Multimedia Messaging Services (MMS) message, an e-mail, or a message in an instant-messaging application.

At step 204, upon receiving the message, the method includes detecting a language associated with the received message. The detected language is one of the languages that is specified as a native-language option on communication device 100. The language associated with the received message is detected based on an analysis of the text contained in the message. Alternatively, the language is detected based on contact information associated with a sender of the received message. The contact information includes language preferences of communication with the sender and is stored in memory 114 within communication device 100.

In other words, a program or an algorithm may be applied to the body of the received message to detect the language of the text utilized in the message, or all messages from a particular sender in a contact list may be assumed to be in a particular language. For example, if a message is received from a sender who is designated as someone who communicates in Spanish, the language of the text is detected as Spanish without analyzing the text.

In one embodiment, a language of the received message is detected based on a combination of an analysis of the text and the predefined language settings regarding a sender associated with the received message. For example, a sender may have three default languages for communication and all messages associated with that sender are in one of the default languages. Therefore, the text is analyzed utilizing dictionaries associated with the three default languages, as opposed to utilizing all possible dictionaries available in computing device 100. In another embodiment, the three default languages associated with a particular sender are ranked for preferred use and the dictionaries are checked according to the order of the rankings.

At step 206, the method includes updating local-language parameters based on the detected language. For example, when it is detected that a language of the received message is Spanish, corresponding local-language parameters are updated for the Spanish language for all text-based data for a user interface and keyboards. These parameters allow contextual and functional information to be displayed or presented in the detected language. For example, the parameters allow all that text-based information, including menu options, fields associated with the received message, and keyboards, etc., to be displayed in the detected language.

Parameters for each language native to computing device 100 are stored in memory 114 or are received by network-interface device 128 for the detected language. Accordingly, when a particular language is detected, corresponding parameters are utilized to update the local-language parameters.

Menu options include options associated with functions related to received messages. For example, for an e-mail, the functions include responding, forwarding, deleting, or flagging a received message. Therefore, when, for example, a detected language of a received message is Spanish, specific customization based on local-language parameters for the Spanish language allows for a "Reply" button to be displayed in Spanish.

Field options include options that indicate contextual information associated with the received message, including a sender of the received message, at least one recipient of the received message, the subject of the received message, or additional information related to the received message. Continuing the example from before, specific customization based on a local-language parameter for the Spanish language allows fields such as "To" or "From" to be displayed in Spanish as "A" or "De," respectively.

A keyboard to input the detected language is displayed, or actuation of keys on keyboard 120 is associated with input of the detected language. For example, a keyboard for the Spanish language is displayed or inputs into keyboard 120 are associated with input of the Spanish language. In this way the local-language parameters allow for operational and contextual information related to the received message to be relayed in the detected language.

At step 208, the method includes displaying the received message. The received message is displayed based on an operational action, for example, selection of a message for viewing or replying. Alternatively, a received message is displayed based on functional properties of an application. For example, in an e-mail environment without automatic updating, when a new e-mail message is received, it is automatically displayed. As an additional example, in certain instant-messaging applications, conversations occur in real time via an instant-messaging service. If a messaging window is open on the display, the received message is automatically displayed. Otherwise, a notification is provided to a user that a message is received. Furthermore, in an instant-messaging application, the display usually includes a text-input box into which the user can type a reply that can be seen by the other party in the conversation as soon as the user sends the response.

At step 210, the method includes updating additional displayed information based on the local-language parameters when the received message is displayed. The updated additional displayed information includes text-based information for user interfaces including menu options, keyboard, and fields. In one embodiment, the updated additional displayed information includes all or some of the text displayed along with the received message and associated with the received message. The additional displayed information includes information in text form based on local-language parameters and is not limited merely to menu options, keyboard, and fields.

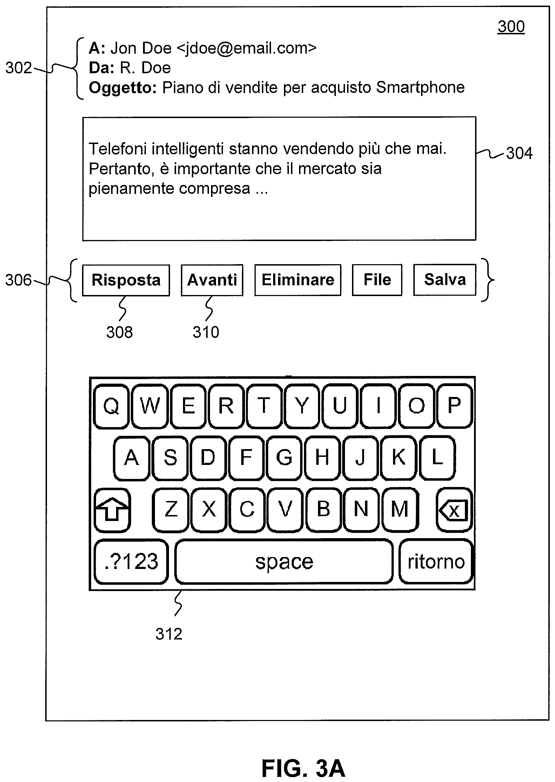

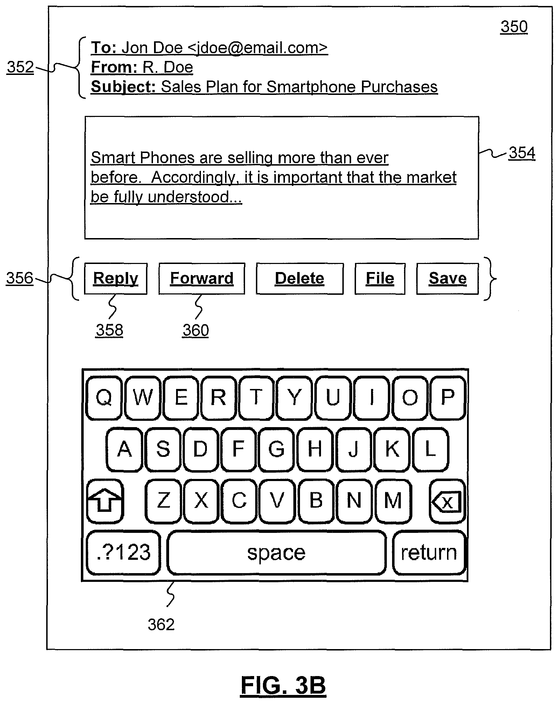

For example, FIGS. 3A and 3B illustrate exemplary displays 300 and 350, respectively, which include updated displayed information based on the local-language parameters according to an embodiment. In this example, a first sender sends messages to the user in Italian and a second sender sends messages to the user in English, with both senders utilizing e-mail. Display 300 illustrates an exemplary display when the detected language is Italian. Display 300 includes a fields section 302, a message display 304, and menu options 306. The message display 304 displays the received message detected to be in the Italian language. Accordingly, at step 206 (as shown in FIG. 2), local-language parameters are generated for Italian. Therefore, at step 210, additional displayed information, which includes fields section 302 and menu options 306, are updated based on the local-language parameters. As illustrated, the fields in fields section 302 are in Italian, while the menu options 306 are also in Italian. Menu options 306 are functional menu options, for example, "Risposta" button 308 allows a user to draft a reply to the received message, while "Avanti" button 310 allows a user to forward the received message displayed in message display 304. Furthermore, keyboard 312 contains "ritorni", which is the key in Italian for the "return" function.

In contrast, display 350 illustrates an exemplary display when the detected language is English. Display 350 includes a fields section 352, a message display 354, and menu options 356. The message display 354 displays the received message detected to be in the English language. Accordingly, at step 206 (as shown in FIG. 2), local-language parameters are generated for English. Therefore, at step 210, additional displayed information, which includes fields section 352 and menu options 356, are updated based on the local-language parameters. As illustrated, the fields in fields section 352 are in English, while the menu options 356 are also in English. Menu options 356 are functional menu options, for example, "Reply" button 358 allows a user to draft a reply to the received message, while "Forward" button 360 allows a user to forward the received message displayed in message display 354. Furthermore, keyboard 362 contains the key for the "return" function in English.

In another embodiment, if the detected language contained non-Roman characters, the keyboard would include non-Roman characters. For example, if the detected language is Arabic or Chinese, all of the displayed characters of a virtual keyboard are in either Arabic or Chinese.

In another embodiment, another step (not illustrated) is included after step 210. In this step, the additional display settings are reverted back to a language that was previously being utilized for the local-language parameters before the received message was received or displayed. Alternatively, the additional display information is reverted back to a preselected or predefined language. For example, computing device 100 may be utilizing Spanish for the additional displayed information before the messages are received. Accordingly, display device 124 may display field sections (not illustrated) and menu options (not illustrated) in Spanish before receiving the respective messages in Italian and English displayed in the message displays 304 and 354. Therefore, display 300 is generated when a message in Italian is received and display 350 is generated when a message in English is received. Thereafter, when the received messages are no longer displayed, the additional displayed information reverts back to Spanish because computing device 100 was previously utilizing Spanish for the local-language parameters.

Embodiments are represented as a software product stored in a machine-readable medium (also referred to as a computer-readable medium, a processor-readable medium, or a computer-usable medium having a computer-readable program code embodied therein). The machine-readable medium is any suitable tangible medium, including a magnetic, optical, or electrical storage medium including a diskette, compact-disk read-only memory (CD-ROM), memory device (volatile or nonvolatile), or similar storage mechanism. The machine-readable medium can contain various sets of instructions, code sequences, configuration information, or other data, which, when executed, cause a processor to perform steps in a method according to an embodiment. Those of ordinary skill in the art will appreciate that other instructions and operations necessary to implement the described embodiments can also be stored on the machine-readable medium. Software running from the machine-readable medium can interface with circuitry to perform the described tasks.

While the embodiments here described are directed to particular implementations of the communication device and the method of controlling the communication device, one should understand that modifications and variations can occur to those skilled in the art.

## Claims

1. A method performed in a communication device (100), the method comprising:
receiving a message;
detecting a language associated with the received message;
updating local-language parameters based on the detected language;
displaying the received message; and
updating, based on the updated local-language parameters, additional displayed information, the additional information being displayed along with the received message and being associated with the received message, the additional displayed information comprising text-based information for a user interface, wherein updating the additional displayed information comprises displaying the text-based information for the user interface in the detected language.

2. The method of claim 1, wherein the local-language parameters include one of menus, a keyboard, and fields.

3. The method of claim 2, wherein the menus include menu options associated with functions of responding, forwarding, deleting, or flagging the received message, or
wherein the fields include field options indicating a sender of the received message, at least one recipient of the received message, the subject of the received message, or additional information related to the received message, or
wherein the keyboard includes alphabets and keyboard keys illustrated in the detected language.

4. The method of claim 1, wherein the additional displayed information includes all text displayed along with the received message.

5. The method of claim 1, further comprising:
reverting a language for the additional displayed information to a preset language when the received message is no longer displayed.

6. The method of claim 1, wherein the language associated with the received message is detected based on analyzing text or contact information associated with the sender that is stored in an address book associated with the communication device.

7. An electronic device (100) comprising:
a processor (112);
a memory (114) in electronic communication with the processor (112), the memory (114) storing one or more routines executable by the processor (112), the one or more routines being adapted to:
receive, by an interface (128) of the electronic device (100) and via a network, a message;
detect a language associated with the received message;
update local-language parameters based on the detected language;
display the received message; and
update, based on the updated local-language parameters, additional displayed information, the additional information being displayed along with the received message and being associated with the received message, the additional displayed information comprising text-based information for a user interface, wherein updating the additional displayed information comprises displaying the text-based information for the user interface in the detected language.

8. The electronic device (100) of claim 7, wherein the local-language parameters include one of menus, a keyboard, and fields.

9. The electronic device (100) of claim 8, wherein the menus include menu options associated with functions of responding, forwarding, deleting, or flagging the received message, or
wherein the fields include field options indicating a sender of the received message, at least one recipient of the received message, the subject of the received message, or additional information related to the received message, or
wherein the keyboard includes alphabets and keyboard keys illustrated in the detected language.

10. The electronic device of claim 7, wherein the additional displayed information includes all text displayed along with the received message.

11. The electronic device (100) of claim 7, wherein the one or more routines are further adapted to:
revert a language for the additional displayed information to a preset language when the received message is no longer displayed.

12. The electronic device (100) of claim 7, wherein the language associated with the received message is detected based on analyzing text or contact information associated with the sender that is stored in an address book associated with the communication device.

13. A computer-readable storage medium (114) storing one or more programs, the one or more programs comprising instructions, when executed by a computing device (100), that cause the device (100) to:
receive, by an interface (128) of an electronic device (100) and via a network, a message;
detect a language associated with the received message;
update local-language parameters based on the detected language;
display the received message; and
update based on the updated local-language parameters, additional displayed information, the additional information being displayed along with the received message and being associated with the received message, the additional displayed information comprising text-based information for a user interface, wherein updating the additional displayed information comprises displaying the text-based information for the user interface in the detected language.

14. The computer-readable storage medium (114) of claim 13, arranged to implement the method of any of claims 2 to 6.

## Patentansprüche

1. Verfahren, das in einer Kommunikationsvorrichtung (100) durchgeführt wird, wobei das Verfahren umfasst:
Empfangen einer Nachricht;
Erkennen einer Sprache, die der empfangenen Nachricht zugeordnet ist;
Aktualisieren der Parameter einer lokalen Sprache basierend auf der erkannten Sprache;
Anzeigen der empfangenen Nachricht; und
Aktualisieren von zusätzlichen angezeigten Informationen auf der Grundlage der aktualisierten Parameter der lokalen Sprache, wobei die zusätzlichen Informationen zusammen mit der empfangenen Nachricht angezeigt und der empfangenen Nachricht zugeordnet werden, wobei die zusätzlichen angezeigten Informationen textbasierte Informationen für eine Benutzeroberfläche umfassen, wobei das Aktualisieren der zusätzlichen angezeigten Informationen das Anzeigen der textbasierten Informationen für die Benutzeroberfläche in der erkannten Sprache umfasst.

2. Verfahren nach Anspruch 1, wobei die Parameter der lokalen Sprache eines der folgenden aufweisen: Menüs, eine Tastatur und Felder.

3. Verfahren nach Anspruch 2, wobei die Menüs Menüoptionen aufweisen, die Funktionen zum Antworten, Weiterleiten, Löschen oder Markieren der empfangenen Nachricht zugeordnet sind, oder
wobei die Felder Feldoptionen aufweisen, die einen Absender der empfangenen Nachricht, mindestens einen Empfänger der empfangenen Nachricht, den Betreff der empfangenen Nachricht oder zusätzliche Informationen in Bezug auf die empfangene Nachricht angeben, oder
wobei die Tastatur Alphabete und Tastaturtasten aufweist, die in der erkannten Sprache dargestellt werden.

4. Verfahren nach Anspruch 1, wobei die zusätzlichen angezeigten Informationen jeden Text aufweisen, der zusammen mit der empfangenen Nachricht angezeigt wird.

5. Verfahren nach Anspruch 1, weiter umfassend:
Zurücksetzen einer Sprache für die zusätzlichen angezeigten Informationen in eine voreingestellte Sprache, wenn die empfangene Nachricht nicht mehr angezeigt wird.

6. Verfahren nach Anspruch 1, wobei die der empfangenen Nachricht zugeordnete Sprache basierend auf der Analyse von Text oder Kontaktinformationen, die dem Absender zugeordnet sind und in einem der Kommunikationsvorrichtung zugeordneten Adressbuch gespeichert sind, erkannt wird.

7. Elektronische Vorrichtung (100), umfassend:
einen Prozessor (112);
einen Speicher (114) in elektronischer Verbindung mit dem Prozessor (112),
wobei der Speicher (114) eine oder mehrere Routinen speichert, die durch den Prozessor (112) ausführbar sind, wobei die eine oder mehreren Routinen angepasst sind, um:
durch eine Schnittstelle (128) der elektronischen Vorrichtung (100) und über ein Netzwerk eine Nachricht zu empfangen;
eine Sprache zu erkennen, die der empfangenen Nachricht zugeordnet ist;
Parameter einer lokalen Sprache basierend auf der erkannten Sprache zu aktualisieren;
die empfangene Nachricht anzuzeigen; und
auf der Grundlage der aktualisierten Parameter der lokalen Sprache zusätzliche angezeigte Informationen zu aktualisieren, wobei die zusätzlichen Informationen zusammen mit der empfangenen Nachricht angezeigt werden und der empfangenen Nachricht zugeordnet sind, wobei die zusätzlichen angezeigten Informationen textbasierte Informationen für eine Benutzeroberfläche umfassen, wobei das Aktualisieren der zusätzlichen angezeigten Informationen das Anzeigen der textbasierten Informationen für die Benutzeroberfläche in der erkannten Sprache umfasst.

8. Elektronische Vorrichtung (100) nach Anspruch 7, wobei die Parameter der lokalen Sprache eines der folgenden aufweisen: Menüs, eine Tastatur und Felder.

9. Elektronische Vorrichtung (100) nach Anspruch 8, wobei die Menüs Menüoptionen aufweisen, die Funktionen zum Antworten, Weiterleiten, Löschen oder Markieren der empfangenen Nachricht zugeordnet sind, oder
wobei die Felder Feldoptionen aufweisen, die einen Absender der empfangenen Nachricht, mindestens einen Empfänger der empfangenen Nachricht, den Betreff der empfangenen Nachricht oder zusätzliche Informationen bezüglich der empfangenen Nachricht angeben, oder
wobei die Tastatur Alphabete und Tastaturtasten aufweist, die in der erkannten Sprache dargestellt sind.

10. Elektronische Vorrichtung nach Anspruch 7, wobei die zusätzlichen angezeigten Informationen den gesamten zusammen mit der empfangenen Nachricht angezeigten Text aufweisen.

11. Elektronische Vorrichtung (100) nach Anspruch 7, wobei die eine oder mehreren Routinen weiter angepasst sind, um:
eine Sprache für die zusätzlichen angezeigten Informationen in eine voreingestellte Sprache umzuwandeln, wenn die empfangene Nachricht nicht mehr angezeigt wird.

12. Elektronische Vorrichtung (100) nach Anspruch 7, wobei die der empfangenen Nachricht zugeordnete Sprache basierend auf der Analyse von Text oder Kontaktinformationen, die dem Absender zugeordnet sind und in einem der Kommunikationsvorrichtung zugeordneten Adressbuch gespeichert sind, erkannt wird.

13. Computerlesbares Speichermedium (114), das ein oder mehrere Programme speichert, wobei das eine oder die mehreren Programme Anweisungen umfassen, die, wenn sie von einer Computervorrichtung (100) ausgeführt werden, bewirken, dass die Vorrichtung (100):
eine Nachricht über eine Schnittstelle (128) einer elektronischen Vorrichtung (100) und über ein Netzwerk empfängt;
eine Sprache erkennt, die der empfangenen Nachricht zugeordnet ist;
Parameter einer lokalen Sprache basierend auf der erkannten Sprache aktualisiert;
die empfangene Nachricht anzeigt; und
auf der Grundlage der aktualisierten Parameter der lokalen Sprache zusätzliche angezeigte Informationen aktualisiert, wobei die zusätzlichen Informationen zusammen mit der empfangenen Nachricht angezeigt werden und der empfangenen Nachricht zugeordnet sind, wobei die zusätzlichen angezeigten Informationen textbasierte Informationen für eine Benutzeroberfläche umfassen, wobei das Aktualisieren der zusätzlichen angezeigten Informationen das Anzeigen der textbasierten Informationen für die Benutzeroberfläche in der erkannten Sprache umfasst.

14. Computerlesbares Speichermedium (114) nach Anspruch 13, das so angeordnet ist, dass es das Verfahren nach einem der Ansprüche 2 bis 6 ausführt.

## Revendications

1. Procédé exécuté dans un dispositif de communication (100), le procédé comprenant les étapes consistant à :
recevoir un message ;
détecter une langue associée au message reçu ;
mettre à jour les paramètres de langue locale sur la base de la langue détectée ;
afficher le message reçu ; et
mettre à jour, sur la base des paramètres de langue locale mis à jour, des informations affichées supplémentaires, les informations supplémentaires étant affichées avec le message reçu et étant associées au message reçu, les informations affichées supplémentaires comprenant des informations textuelles pour une interface utilisateur, où la mise à jour des informations affichées supplémentaires comprend l'affichage des informations textuelles pour l'interface utilisateur dans la langue détectée.

2. Procédé de la revendication 1, dans lequel les paramètres de langue locale comportent l'un de menus, d'un clavier et de champs.

3. Procédé de la revendication 2, dans lequel les menus comportent des options de menu associées à des fonctions de réponse, de transfert, de suppression ou de marquage du message reçu, ou
dans lequel les champs comportent des options de champ indiquant un expéditeur du message reçu, au moins un destinataire du message reçu, le sujet du message reçu, ou des informations supplémentaires relatives au message reçu, ou
dans lequel le clavier comporte des touches alphabétiques et de clavier illustrées dans la langue détectée.

4. Procédé de la revendication 1, dans lequel les informations affichées supplémentaires comportent tout le texte affiché avec le message reçu.

5. Procédé de la revendication 1, comprenant en outre l'étape consistant à :
rétablir une langue pour les informations affichées supplémentaires dans une langue prédéfinie lorsque le message reçu n'est plus affiché.

6. Procédé de la revendication 1, dans lequel la langue associée au message reçu est détectée sur la base d'une analyse de texte ou d'informations de contact associées à l'expéditeur qui sont stockées dans un carnet d'adresses associé au dispositif de communication.

7. Dispositif électronique (100) comprenant :
un processeur (112) ;
une mémoire (114) en communication électronique avec le processeur (112), la mémoire (114) stockant une ou plusieurs routines pouvant être exécutées par le processeur (112), les une ou plusieurs routines étant adaptées pour :
recevoir, par une interface (128) du dispositif électronique (100) et par l'intermédiaire d'un réseau, un message ;
détecter une langue associée au message reçu ;
mettre à jour les paramètres de langue locale sur la base de la langue détectée ;
afficher le message reçu : et
mettre à jour, sur la base des paramètres de langue locale mis à jour, des informations affichées supplémentaires, les informations supplémentaires étant affichées avec le message reçu et étant associées au message reçu, les informations affichées supplémentaires comprenant des informations textuelles pour une interface utilisateur, où la mise à jour des informations affichées supplémentaires comprend l'affichage des informations textuelles pour l'interface utilisateur dans la langue détectée.

8. Dispositif électronique (100) de la revendication 7, dans lequel les paramètres de langue locale comportent l'un de menus, d'un clavier, et de champs.

9. Dispositif électronique (100) de la revendication 8, dans lequel les menus comportent des options de menu associées à des fonctions de réponse, de transfert, de suppression ou de marquage du message reçu, ou
dans lequel les champs comportent des options de champ indiquant un expéditeur du message reçu, au moins un destinataire du message reçu, le sujet du message reçu, ou des informations supplémentaires relatives au message reçu, ou
dans lequel le clavier comporte des touches alphabétiques et de clavier illustrées dans la langue détectée.

10. Dispositif électronique de la revendication 7, dans lequel les informations affichées supplémentaires comportent tout le texte affiché avec le message reçu.

11. Dispositif électronique (100) de la revendication 7, dans lequel les une ou plusieurs routines sont en outre adaptées pour :
rétablir une langue pour les informations supplémentaires affichées dans une langue prédéfinie lorsque le message reçu n'est plus affiché.

12. Dispositif électronique (100) de la revendication 7, dans lequel la langue associée au message reçu est détectée sur la base d'une analyse de texte ou d'informations de contact associées à l'expéditeur qui sont stockées dans un carnet d'adresses associé au dispositif de communication.

13. Support de stockage lisible par ordinateur (114) stockant un ou plusieurs programmes, les un ou plusieurs programmes comprenant des instructions, lorsqu'elles sont exécutées par un dispositif informatique (100), qui amènent le dispositif (100) à :
recevoir, par une interface (128) d'un dispositif électronique (100) et par l'intermédiaire d'un réseau, un message ;
détecter une langue associée au message reçu ;
mettre à jour les paramètres de la langue locale sur la base de la langue détectée ;
afficher le message reçu ; et
mettre à jour sur la base des paramètres de langue locale mis à jour, des informations affichées supplémentaires, les informations supplémentaires étant affichées avec le message reçu et étant associées au message reçu, les informations affichées supplémentaires comprenant des informations textuelles pour une interface utilisateur, où la mise à jour des informations affichées supplémentaires comprend l'affichage des informations textuelles pour l'interface utilisateur dans la langue détectée.

14. Support de stockage lisible par ordinateur (114) de la revendication 13, conçu pour mettre en œuvre le procédé de l'une des revendications 2 à 6.
